# EUROPEAN PATENT APPLICATION

(11) **EP 4 640 409 A1**
(43) Date of publication of application: **29.10.2025**
(21) Application number: 24171681.0
(22) Date of filing: 22.04.2024
(51) Int. Cl.: B29C 64/124, B29C 64/268, B29C 64/277, B33Y 10/00, B33Y 30/00, B33Y 70/00

(54) **AN APPARATUS FOR FORMING A THREE-DIMENSIONAL STRUCTURE BY DUAL-COLOR PHOTOPOLYMERIZATION OF A PHOTOCURABLE RESIN**

(71) Applicant: xolo GmbH, 12489 Berlin (DE)
(72) Inventor: Radzinski, Dirk, 12489 Berlin (DE); Reuter, Marcus, 12489 Berlin (DE); Garmshausen, Yves, 12489 Berlin (DE)
(74) Representative: Hafner & Kohl PartmbB

(57) **Abstract**

An apparatus for forming a three-dimensional structure by dual-color photopolymerization of a photocurable resin.

## Description

### Field of invention

The invention relates to an apparatus for forming a three-dimensional structure by dual-color photopolymerization of a photocurable resin.

### Background Art

Apparatuses for forming a three-dimensional structure by photopolymerization of a photocurable resin on a substrate are generally known from the prior art. These apparatuses typically comprise a substrate supply device, comprising a substrate supply means configured to supply a substrate on which the respective three-dimensional structure can be formed in a supply direction and a substrate take-up means configured to take-up the substrate, wherein the supply means and the take-up means are arranged relative to each other such that the substrate extending between the supply means and the take-up means defines a forming zone in which a three-dimensional structure can be formed by photopolymerization of a photocurable resin. Further, respective apparatuses typically, comprise a resin supply device configured to supply the respective photocurable resin on the substrate supplied by the substrate supply device and an irradiation device configured to irradiate the respective photocurable resin supplied on the substrate with light of a specific wavelength.

Respective apparatuses exhibit drawbacks with respect to the quality of the three-dimensional structures which are formed therewith. Respective quality drawbacks are, whilst not being bound by theory, believed to be caused by difficulties in controlling the photopolymerization process of the photocurable resin with the irradiation device which irradiates the photocurable resin supplied on the substrate with light of a specific wavelength.

Hence, there is a need to improve respective apparatuses with respect to the quality of the three-dimensional structures, particularly the resolution of geometric features of respective three-dimensional structures, which can be formed therewith.

It is therefore, the object of the invention to provide an improved apparatus for forming a three-dimensional structure by photopolymerization of a photocurable resin.

### Summary of the invention

A first aspect of the invention relates to an apparatus for forming a three-dimensional structure by dual-color photopolymerization of a photocurable resin. The apparatus is thus, generally configured to form a three-dimensional structure by dual-color photopolymerization of a photocurable resin. A respective three-dimensional structure can be a three-dimensional object or form part of a three-dimensional object. A respective three-dimensional object can be a technical component or form part of a technical component, for instance. As an example, a technical component can be an optical component or form part of an optical component. As an example, a respective optical component can be a diffractive element, a transmissive element, or a lens element, for instance.

As such, the apparatus can be configured to perform, via dual-color photopolymerization, one or more local polymerization processes of a photocurable resin which comprises one or more photoinitiators. As an example, a respective photocurable resin can be a photocurable monomer resin or a photocurable oligomer resin, which may include acrylates, methacrylates, thiol + ene, epoxides, oxiranes, oxetanes, or vinylethers, for instance. The apparatus can be configured to continuously additively manufacture at least one three-dimensional structure by means of multiphoton photopolymerization, particularly multi-color photopolymerization, more particularly dual-color photopolymerization, of a respective photocurable resin on a substrate. Photopolymerization of the photocurable resin is typically, effected by irradiating the photocurable resin with light of at least one first wavelength and, particularly simultaneously, light of at least one second wavelength different from the first wavelength, which results in that molecules of the one or more photoinitiators of the photocurable resin are converted, e.g., due to the absorption of light of the first wavelength, from an initial state in which the molecules of the one or more photoinitiators (substantially) do not absorb the light of the second wavelength, into an intermediate state with changed optical properties compared to the initial state, such that the molecules of the one or more photoinitiators in the intermediate state absorb the light of the second wavelength which results in that the molecules of the one or more photoinitiators are transferred from the intermediate state to a reactive state which locally triggers the polymerization of the photocurable resin to form at least one three-dimensional structure.

A back reaction of the molecules of the one or more photoinitiators from the intermediate state into the initial state can be thermally induced, for instance. Hence, the intermediate state may return thermally at the printing temperature in the photocurable resin to the initial state. Preferably, the intermediate state may return thermally at the printing temperature to the initial state in a reaction or reaction sequence with one or more rate constants with the highest rate constant higher than k=0.01 s⁻¹. Especially preferably, at least one rate constant for the thermal back reaction is higher than 0.02 s⁻¹, more preferably higher than 0.05 s⁻¹, even more preferably higher than 0.1 s⁻¹, still more preferably higher than 1.0 s⁻¹, most preferably higher than 5.0 s⁻¹. Hence, the rate constant may be in the range of 0.05 s⁻¹ and 1.0 s⁻¹, or any other range which may be formed from the values above. A high rate constant may result in an improved resolution of the printed three-dimensional structure.

Alternatively, the intermediate state may substantially not return thermally at the printing temperature in the photocurable resin to the initial state. Preferably, the intermediate state may return thermally at the printing temperature to the initial state in a reaction or reaction sequence with one or more rate constants with at least one rate constant lower than k=100 s⁻¹. Especially preferably, at least one rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Further alternatively, the intermediate state may substantially not return thermally at the printing temperature in the photocurable resin to the initial state. Preferably, the intermediate state may return thermally at the printing temperature to the initial state in a reaction or reaction sequence with one or more rate constants with the highest rate constant lower than k=100 s⁻¹. Especially preferably, the highest rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

A slow or neglectable back reaction may result in a higher degree of polymerization and therefore a harder green state. The typical problem of polymerization behind the printing zone as in processes described in the state of the art is strongly reduced via the apparatus and related process described herein, since the resin is moved out of the forming zone and especially out of the volume which is irradiated by the light of the second wavelength.

Suitable photoinitiators of a respective photocurable resin are known from US5230986A, WO2020245456A1, WO2023034398A1, WO2023034404A1, WO2023034402A1, WO2023220461A1, WO2023220463A1, the contents of which are incorporated herein by reference.

The apparatus can be or comprise a volumetric 3d-printing apparatus, particularly a xolography apparatus, i. e. an apparatus configured to perform the base principles of xolography. The base principles of xolography are specified in WO 2020/245456 A1, the contents of which are incorporated herein by reference.

The apparatus comprises a substrate supply device. The substrate supply device is generally configured to, particularly continuously, supply a substrate on which a three-dimensional structure can be formed by dual-color photopolymerization. The substrate can comprise or define at least one forming zone in which a three-dimensional structure can be formed by dual-color photopolymerization.

The substrate supply device can comprise at least one substrate supply means configured to, particularly continuously, supply a respective substrate in at least one supply direction. The substrate supply means can be arranged at a first position within a structure, particularly a housing structure, of the apparatus. Particularly, the substrate supply means can be configured to move a respective substrate along at least one motion path through at least parts of the apparatus. The at least one supply direction can also be deemed or denoted a motion direction along which the substrate is moved along the at least one motion path through at least parts of the apparatus. The substrate supply means can be built by or comprise one or more substrate supply rollers, for instance. The substrate supply device can further comprise at least one substrate take-up means configured to take-up the respective substrate. The substrate take-up means can be arranged at a second position within the or a structure, particularly a housing structure, of the apparatus, the second position being different from the first position. The substrate take-up means can be built by or comprise one or more substrate take-up rollers, for instance. Notably, the substrate supply means and the substrate take-up means can be arranged relative to each other such that a substrate extending between the substrate supply means and the substrate take-up means defines at least one forming zone in which a three-dimensional structure can be formed by dual-color photopolymerization of a photocurable resin. The at least one forming zone can thus, extend between the substrate supply means and the substrate take-up means. The at least one forming zone can be an unsupported portion of the substrate and thus, a freely extending portion of the substrate. In such a manner, the light used for curing the photocurable resin, via dual-color photopolymerization, in the at least one forming zone does not interact with structural components of the apparatus, particularly the substrate supply means, the substrate take-up means, and any other possible means for supporting, guiding, or deflecting the substrate examples of which will be provided further below.

The substrate supply device can comprise at least one drive means, e.g. a drive motor, for generating a drive force or momentum to drive the substrate supply means to generate a motion of the substrate in the at least one supply direction. Particularly, the substrate supply means can be assigned with at least one drive means, e.g. a drive motor, for generating a drive force or momentum to drive the substrate supply means to generate a motion of the substrate in the at least one supply direction between the substrate supply means and the substrate take-up means. Additionally or alternatively, the substrate take-up means can be assigned with a drive means, e.g. a drive motor, for generating a drive force or momentum to drive the substrate take-up means to generate a motion of the substrate in the at least one supply direction between the substrate supply means and the substrate take-up means.

The apparatus or the substrate supply device, respectively can further comprise at least one of: one or more substrate support means, one or more substrate guiding means, and one or more substrate deflection means, for instance. Respective substrate support means can be built by or comprise substrate support rollers, for instance. Respective substrate support guide means can be built by or comprising substrate guide rollers, for instance. Respective substrate deflection means can be built by or comprising substrate deflection rollers, for instance. At least one of the one or more substrate support means, the one or more substrate guiding means, and the one or more substrate deflection means can be assigned with a drive means, e.g. a drive motor, for generating a drive force or momentum to drive the one or more substrate support means, the one or more substrate guiding means, and the one or more substrate deflection means to generate a motion of the substrate in the at least one supply direction between the substrate supply means and the substrate take-up means.

The substrate supply means, the substrate take-up means and at least one of the optional substrate support means, the optional substrate guiding means, and the optional substrate deflection means can be arranged relative to each other such that the substrate extends in one or more different spatial directions and/or orientations, respectively. At least one spatial direction and orientation, respectively can be a horizontal direction and horizontal orientation, respectively parallel to horizontal axis, a vertical direction and vertical orientation, respectively parallel to a vertical axis, or an inclined direction and inclined orientation, respectively inclined to a horizontal or a vertical axis.

The apparatus further comprises a resin supply device. The resin supply device is configured to supply a photocurable resin on the or a substrate supplied by the substrate supply device, particularly the substrate supply means. As such, the resin supply device is assigned to the substrate supply device and the substrate supply means, respectively. The resin supply device can comprise one or more resin supply means configured to form at least one defined layer of photocurable resin on the or a substrate supplied by the substrate supply device and the substrate supply means, respectively. Respective resin supply means can be built by or comprise one or more nozzle elements via which a photocurable resin can be supplied on a surface of the or a substrate supplied by the substrate supply device and the substrate supply means, respectively. Respective nozzle elements can communicate, e.g. via one or more connection lines, with at least one resin storage device in which one or more photocurable resins are stored. Further, respective resin supply means can be built by or comprise one or more, e.g. blade-like, layer forming elements via which the photocurable resin supplied on the or a surface of the or a substrate supplied by the substrate supply device and the substrate supply means, respectively can be formed in a shape of defined geometric properties. A respective shape of defined geometric properties can be a layer of defined geometric properties, e.g. defined width, defined length, and defined thickness. As an example, the thickness of a respective layer can range between 0.1 mm and 10.0 mm, particularly between 0.5 mm and 5.0 mm, more particularly between 1.0 mm and 4.0 mm, more particularly between 1.25 mm and 3.0 mm, more particularly between 1.5 mm and 2.0 mm.

The apparatus further comprises a dual-color irradiation device configured to irradiate a photocurable resin supplied on the substrate. The dual-color irradiation device is configured to irradiate the photocurable resin supplied on the substrate with light of a first wavelength and, particularly simultaneously, with light of a second wavelength different form the first wavelength. The dual-color irradiation device can comprise at least one first irradiation device comprising at least one first light source for generating the light of the first wavelength and at least one second irradiation device comprising at least one second light source for generating the light of the second wavelength. The dual-color irradiation device can be configured to generate a light sheet from the light of the first wavelength, wherein the light sheet extends in a light sheet plane. Further, the dual-color irradiation device can be configured to generate a light projection from the light of the second wavelength, wherein the light projection intersects with the light sheet at an intersection angle, particularly an intersection angle of (ca.) 90°.

The at least one first irradiation device can thus, comprise at least one light source configured to irradiate light of a first wavelength towards the photocurable resin on the substrate to generate at least one first light projection forming a light sheet. A respective light sheet can comprise multiple light beams traversing the substrate in a single light plane. The at least one first irradiation device can be built as or comprise a laser or light emitting diode, for instance. The at least one first irradiation device can further comprise at least one optical element which can e.g. comprise at least one of: a Powell-lens, a cylindrical lens, a diffractive optical element, a beam expanding element, a collimating optical element, etc. Additionally or alternatively, the at least one first irradiation device can comprise a light deflection unit, such as e.g. a galvo-scanner or a polygon scanner, for deflecting light towards the substrate. The light as emitted or irradiated by the at least one first irradiation device can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light of the first wavelength can comprise a spectrum of wavelengths, particularly at least partly covering the respective ranges. As an example, the first wavelength can be ca. 375 nm. Typically, the first wavelength will be chosen at least under consideration of the photochemical properties, particularly the photochromic properties, of molecules of a photoinitiator of the photocurable resin.

The at least one second irradiation device can thus, comprise at least one second light source configured to continuously project a respective light projection comprising a plurality of images of light of the second wavelength towards the photocurable resin on the substrate. Each image of the second wavelength can correspond to a specific portion, particularly a specific cross-section, of the three-dimensional structure to be formed with the apparatus. The at least one second irradiation device can be built as or comprise an image projector, for instance. The at least one second irradiation device can further comprise one or more light projection optics. The light as emitted or irradiated by the at least one second irradiation device can comprise a wavelength in the range of: 400 nm - 1000 nm, particularly 425 - 750 nm, more particularly 450 - 675 nm, more particularly 500 - 650 nm, for instance. The light of the second wavelength can comprise a spectrum of wavelengths, particularly at least partly covering the respective ranges. Typically, the second wavelength will be chosen at least under consideration of the photochemical properties, particularly the photochromic properties, of molecules of a photoinitiator of the photocurable resin.

As indicated above, the dual-color irradiation device can be configured to generate a light projection from the light of the second wavelength, wherein the light projection intersects with the light sheet at an intersection angle, particularly an intersection angle of (ca.) 90°. The dual-color irradiation device can thus, be generally configured to irradiate the light of the first wavelength at a first angle, particularly an angle of 0 - 180°, and the light of the second wavelength at a second angle, particularly an angle of 0 - 180°, relative to the main extension plane of the substrate or the at least one forming zone. Respective angles can particularly, range between 15 and 165°, more particularly between 30 and 150°, more particularly between 90 and 150° or between 30 and 90°. Particularly, the light of the second wavelength can be shifted with respect to the light of the first wavelength at a shifting angle of 90°.

Providing the apparatus with a dual-color irradiation device configured to irradiate a photocurable resin supplied on the substrate, wherein the dual-color irradiation device is configured to irradiate the photocurable resin with light of a first wavelength and, particularly simultaneously, light of a second wavelength different form the first wavelength, enables forming three-dimensional structures with higher resolution compared to known apparatuses which comprise an irradiation device which uses light of a single wavelength such that the above-identified drawbacks of the prior art are overcome.

Further exemplary embodiments of the apparatus will be specified in the following; one, more or all of these exemplary embodiments can be arbitrarily combined with each other.

According to an exemplary embodiment, the substrate supply means and the substrate take-up means can be arranged relative to each other such that a substrate extending between the substrate supply means and the substrate take-up means defines at least one planar forming zone in which a three-dimensional structure can be formed by dual-color photopolymerization. The at least one planar forming zone typically, comprises a portion of the substrate which at least partially, preferably predominantly, more preferably completely, extends planar between the substrate supply means and the substrate take-up means. The at least one planar forming zone can extend in a horizontal plane or parallel to a horizontal plane, for instance. As such, the substrate supply means and the substrate take-up means can be arranged in a common horizontal plane such that a substrate extending between the substrate supply means and the substrate take-up means defines at least one horizontal planar forming zone in which a three-dimensional structure can be formed by dual-color photopolymerization. However, it is also conceivable that the at least one planar forming zone is oriented inclined with respect to a horizontal plane. As such, the substrate supply means and the substrate take-up means can be arranged in two different horizontal planes such that a substrate extending between the substrate supply means and the subtract take-up means defines at least one inclined planar forming zone in which a three-dimensional structure can be formed by dual-color photopolymerization. As an example, respective inclination angles comprise angles in the range between 1° and 45°, particularly between 1° and 30°, more particularly between 1° and 15°, relative to the horizontal axis for instance.

According to another exemplary embodiment, the substrate can be a band or a belt, for instance. A respective band or belt can be an endless band or an endless belt, respectively. A respective band or belt can define a resin receiving surface on which the photocurable resin can be supplied by the resin supply device. The resin receiving surface can be an upper or lower surface of the band or belt, respectively.

According to another exemplary embodiment, the substrate can be a polymer film or a polymer foil defining a resin receiving surface on which the photocurable resin can be supplied by the resin supply device. The resin receiving surface can be an upper or lower surface of the polymer film or the polymer foil, respectively. Particularly, the polymer film or a polymer foil can be transmissive at least for the light of the first wavelength and the light of the second wavelength. Yet, it is also conceivable that the polymer film or a polymer foil can absorb, e.g. by a dark color, particularly black color, which absorbs at least the light of the first wavelength and/or the light of the second wavelength to avoid undesired light reflection.

According to another exemplary embodiment, the substrate can have the same or similar optical properties, particularly a same or similar refractive index, as the photocurable resin to be supplied thereon. As such, undesired optical losses at the interface between the substrate and the photocurable resin can be avoided or at least reduced, thereby increasing the efficiency of the curing process. As an example, the refractive index of the substrate and/or the photocurable resin can range between 1.0 and 2.0, particularly between 1.3 and 1.8, for instance.

According to another exemplary embodiment, the resin receiving surface of the substrate can generally be a freely exposed surface of the substrate. Particularly, the resin receiving surface of the substrate can generally be an upper surface or a lower surface of the substrate, for instance. Particularly, the resin receiving surface of the substrate can extend between the substrate supply means and the substrate take-up means. The light emitted from the dual-color irradiation device can be irradiated towards the resin receiving surface of the substrate, respectively. Hence, the at least one first irradiation device and/or the at least one second irradiation device can be arranged adjacently disposed relative the at least one forming zone and substrate, respectively such that the light of the first and/or second wavelength can be directly irradiated towards the substrate and the resin receiving surface of the substrate, respectively. In such configurations, the light of the first and/or second wavelength can be (directly) directed towards the upper and/or lower surface of the substrate and the resin receiving surface of the substrate, respectively. However, it is also conceivable that the at least one first irradiation device and/or the at least one second irradiation device are not arranged adjacently disposed relative the at least one forming zone and substrate, respectively. In such configurations, the light of the first and/or second wavelength can be (indirectly) directed towards the upper and/or lower surface of the substrate and the resin receiving surface of the substrate, respectively by one or more (optical) deflection elements, e.g. mirrors, such that the light of the first and/or second wavelength can be deflected towards the upper and/or lower surface of the substrate and the resin receiving surface of the substrate, respectively. In such configurations, the at least one first irradiation device and/or the at least one second irradiation device can even be arranged remote from the substrate and the resin receiving surface of the substrate, respectively. In another exemplary configuration, the at least one first irradiation device and the at least one second irradiation device can be arranged on opposition side of the substrate. As an example, the at least one first irradiation device can be disposed above an upper surface of the substrate, i.e. above the substrate, and the at least one second irradiation device can be arranged below the upper surface of the substrate, i.e. below the substrate. As such, the apparatus can be provided with a high degree of flexibility with respect to the arrangement of the at least one first irradiation device and/or the at least one second irradiation device.

According to another exemplary embodiment, the substrate can thus, define a resin receiving surface on which the photocurable resin can be supplied by the resin supply device, wherein the dual-color irradiation device is arranged above or below the resin receiving surface of the substrate. It is also conceivable that the at least one first irradiation device of the dual-color irradiation device is arranged above the resin receiving surface of the substrate and the at least one second irradiation device of the dual-color irradiation device is arranged below the resin receiving surface of the substrate, or vice versa.

According to another exemplary embodiment, the substrate can have transmissive and/or non-reflective properties with respect to the light of the first and/or the second wavelength. As such, the optical properties of the substrate do not negatively interact with the light of the first and/or second wavelength. This assures photocuring of the photocurable resin on the substrate with high accuracy which results in three-dimensional structures of good quality, particularly high resolution.

According to another exemplary embodiment, the apparatus can comprise a hardware- and/or software-embodied controller assigned at least to the dual-color irradiation device. The controller can be configured to control the properties of the light of the first wavelength and/or the light of the second wavelength based on an information indicative of at least one chemical and/or physical property of the substrate and/or at least one chemical and/or physical property of the photocurable resin supplied on the substrate. As such, the irradiation process of the photocurable resin and thus, the curing process of the photocurable resin can be controlled by controlling the properties, e.g. intensity, energy density, etc., of the light of the first wavelength and/or the light of the second wavelength based on an information indicative of at least one chemical and/or physical property of the substrate and/or at least one chemical and/or physical property of the photocurable resin supplied on the substrate. A respective chemical and/or physical property of the substrate and/or the photocurable resin supplied on the substrate can refer to a property which influences the absorption behavior of the photocurable resin for the light of the first and/or second wavelength. As such, respective chemical and/or physical property of the substrate and/or the photocurable resin supplied on the substrate can refer to the chemical composition of the substrate and/or the photocurable resin supplied on the substrate, the absorptive and/or transmissive properties of the substrate and/or the photocurable resin supplied on the substrate, surface properties, e.g. roughness, of the substrate and/or the photocurable resin supplied on the substrate, for instance.

According to another exemplary embodiment, the thickness of the photocurable resin supplied on the substrate can range between 0.1 mm and 10 mm, particularly between 0.5 mm and 5.0 mm, more particularly between 1.0 mm and 4.0 mm, more particularly between 1.25 mm and 3.0 mm, more particularly between 1.5 mm and 2.0 mm, for instance. As such, the thickness of a respective layer of the photocurable resin supplied on the substrate can range between 0.5 mm and 5.0 mm, particularly between 1.0 mm and 4.0 mm, more particularly between 1.25 mm and 3.0 mm, more particularly between 1.5 mm and 2.0 mm, for instance. Generally, the thickness of the photocurable resin supplied on the substrate can enable that comparatively high concentrations of the respective one or more photoinitiators can be used which assures that the formed three-dimensional structure has comparatively high hardness (already) in the respective green state. Lower thicknesses of the photocurable resin can thus, result in that the photocurable resin can comprise a chemical composition with a relative high concentration of the one or more photoinitiators. Lower thicknesses of the photocurable resin can also enable the photocurable resin to tolerate high loadings of particles which cause scattering and still allow decent quality of the three-dimensional structure.

According to another exemplary embodiment, the photocurable resin can comprise one or more absorption agents increasing the absorption properties of the photocurable resin with respect to the light of the first wavelength and/or the light of the second wavelength. Additionally or alternatively, the photocurable resin can comprise one or more color agents, such as e.g. dyes. Providing the photocurable resin with a specific color which can also increase the absorption properties of the photocurable resin with respect to the light of the first wavelength and/or the light of the second wavelength, thus resulting in a formed three-dimensional structure having comparatively high hardness (already) in the respective green state. Respective absorption agents and/or color agents can e.g. comprise at least one of: 2,5-Bis(5-tert-butyl-benzoxazol-2-yl)thiophen (also BBOT, OB+), Derivatives of azobenzene (e.g. Sudan I), Derivatives of anthracene (e.g. UVS-1101), Derivatives of coumarin, Derivatives of phenazine, alpha-cyano acrylates (e.g. octocrylene), 2-Hydroxyphenylbenzotriazole (e.g. UV-320, Tinuvin 320), 2-Hydroxyphenyl-s-triazine (e.g. Tinuvin 1600, Tinuvin 479).

It has been indicated above that respective resin supply means can be built by or comprise one or more, e.g. blade-like, layer forming elements via which the photocurable resin supplied on the or a surface of the or a substrate supplied by the substrate supply device and the substrate supply means, respectively can be formed in a layer of defined geometric properties. Hence, according to another exemplary embodiment, the resin supply device can be configured to supply a layer, particularly a continuous layer, of photocurable resin on the or a substrate supplied by the substrate supply device and the substrate supply means, respectively wherein the resin supply device comprises one or more layer forming elements, e.g. layer forming blades, configured to form the layer of photocurable resin on the substrate. Respective layer forming elements can be particularly, configured to form a layer of homogenous geometric properties, particularly homogenous thickness, which can positively affect the curing properties of the photocurable resin on the substrate. one or more of respective layer forming elements can be moveably supported relative to the substrate, e.g. to achieve a specific geometry, particularly a specific thickness, of a respective layer of photocurable resin. As an example, the distance between a free layer forming contour of one or more layer forming elements and the surface of the substrate can be adjusted by a respective motion of the one or more layer forming elements relative to the surface of the substrate.

According to another exemplary embodiment, the apparatus can comprise a determination device, comprising one or more determination elements, e.g. (optical) sensors, configured to determine one or more geometric properties, e.g. width, length, thickness, etc., of a respective layer of photocurable resin at one or more determination positions of the substrate. Respective determination positions can particularly, comprise one position before (upstream with respect to the at least one supply direction) the at least one forming zone and/or one position after (downstream with respect to the at least one supply direction) the at least one forming zone. The information generated by respective determination elements can be fed to the or a controller of the apparatus, e.g. for controlling the operation of the at least one first irradiation device and/or the at least one second irradiation device, e.g. by controlling the properties of the light of the first and/or second wavelength. As such, also geometric properties of the photocurable resin on the substrate can be considered for implementing a control of the operation of the at least one first irradiation device and/or the at least one second irradiation device of the dual-color irradiation device.

According to another exemplary embodiment, the apparatus can comprise at least one first resin removal device configured to remove uncured resin from the substrate. The at least one first resin removal device is particularly arranged downstream of the dual-color irradiation device in the at least one supply direction. The at least one first resin removal device can comprise one or more first resin removal elements configured to chemically and/or physically remove uncured resin from the substrate. As an example, a respective first resin removal element can be configured to remove uncured resin from the substrate by physical means, such as e.g. a dripping plate, centrifugal forces via a roller, by mechanical means, such as e.g. a scraper, and/or by applying, e.g. via spraying, rinsing, etc., a resin removal fluid, e.g. a solvent, on the substrate such that uncured resin can be rinsed or washed off the substrate. In either case, removed uncured resin can be fed back, possibly after one or more intermediate processing steps, to the resin supply device. In such a manner, a resin recycling loop can be implemented which can form base for a sustainable operation of the apparatus. Typically, only resin which has been physically removed is fed back because this resin does not comprise solvent.

According to another exemplary embodiment, the apparatus can comprise at least one second resin removal device configured to remove uncured resin from a formed three-dimensional structure. The at least one second resin removal device is particularly arranged downstream of the dual-color irradiation device in the supply direction. The at least one second resin removal device can comprise one or more second resin removal elements configured to chemically and/or physically remove uncured resin from the three-dimensional structure. As an example, a respective second resin removal element can be configured to remove uncured resin from the three-dimensional structure by physical means, such as e.g. a dripping plate, centrifugal forces via a roller, by mechanical means, such as e.g. a scraper, and/or by applying, e.g. via spraying, rinsing, etc., a resin removal fluid, e.g. a solvent, on the three-dimensional structure such that uncured resin can be rinsed or washed off the three-dimensional structure. In either case, removed uncured resin can be fed back, possibly after one or more intermediate processing steps, to the resin supply device. In such a manner, a resin recycling loop can be implemented which can form base for a sustainable operation of the apparatus.

As such, the at least one first resin removal device and/or the at least one second resin removal device can be configured to convey uncured resin removed from the substrate and/or a formed three-dimensional structure to the resin supply device, particularly to generate a resin recycling loop. The apparatus can therefore, comprise one or more conveying devices, such as e.g. pumps, and associated conveying lines, such as e.g. tubes, pipes, etc., for conveying uncured resin removed from the substrate and/or a formed three-dimensional structure to the resin supply device, particularly to generate a resin recycling loop.

Particularly for implementing a respective resin recycling loop, the apparatus can further comprise a blender or mixer configured to blend or mix at least a part of uncured photocurable resin which has been removed from the substrate or from a three-dimensional structure with fresh photocurable resin, particularly to create a homogenous blend or mixture having defined chemical and/or physical properties. Hence, the apparatus 10 can comprise a supply of fresh photocurable resin which can be blended or mixed with removed uncured photocurable resin to generate a processed photocurable resin containing both removed photocurable resin and fresh photocurable resin.

According to another exemplary embodiment, the apparatus can comprise one or more resin processing devices configured to process uncured resin removed from the substrate and/or a three-dimensional structure to alter at least one property of the uncured resin with respect to at least one target property of the resin to be supplied via the resin supply device. Respective resin processing devices can particularly, be configured to alter at least one chemical and/or physical property, e.g. chemical composition, e.g. with respect to the concentration of a photoinitiator, absorption of the light of the first and/or second wavelength, transmission of the light of the first and/or second wavelength, viscosity, temperature, etc., of the uncured resin with respect to at least one target property, e.g. a target chemical composition, e.g. with respect to a target concentration of the photoinitiator, a target absorption of the light of the first and/or second wavelength, a target transmission of the light of the first and/or second wavelength, a target viscosity, a target temperature, etc., of the resin to be supplied via the resin supply device. Respective resin processing devices can thus, comprise one or more material supply devices e.g. configured to supply fresh photocurable resin to uncured resin removed from the substrate and/or a three-dimensional structure. Respective resin processing devices can further comprise determination elements, e.g. sensors, to determine at least one respective chemical and/or physical property of the uncured resin removed from the substrate and/or a three-dimensional structure before, during or after processing.

According to another exemplary embodiment, the apparatus can comprise at least one post-processing device configured to perform at least one chemical and/or physical post-processing measure on a formed three-dimensional structure. The at least one post-processing device can be particularly, configured to post-cure a formed three-dimensional structure such that the formed three-dimensional structure obtains desired physical properties, e.g. optical and/or mechanical properties. As such, post-processing can particularly, comprise curing of the formed three-dimensional structure, e.g. by exposing the formed three-dimensional structure to electromagnetic and/or thermal energy, and/or changing the optical absorptive and/or transmissive properties of the formed three-dimensional structure with respect to light in the visible wavelength spectrum, particularly the color, e.g. by exposing the formed three-dimensional structure to electromagnetic and/or thermal energy. Generally, post-processing can comprise transferring the formed three-dimensional structure from a green state e.g. to a brown state and/or a final state.

According to another exemplary embodiment, the apparatus can comprise a three-dimensional structure removing device configured to, particularly continuously or discontinuously, remove one or more three-dimensional structures, i.e. particularly post-processed three-dimensional structures, from the substrate. Particularly, the three-dimensional structure removing device 130 can be an active three-dimensional structure removing device configured to actively remove one or more three-dimensional structures from the substrate, e.g. by actively removing the respective three-dimensional structure from the substrate, e.g. by a grabbing action. A concrete exemplary embodiment of an active three-dimensional structure removing device can be a handling robot configured to remove, e.g. by grabbing, one or more three-dimensional structures from the substrate and transferring it e.g. into a three-dimensional structure collecting device. Alternatively, the three-dimensional structure removing device can be a passive three-dimensional structure removing device configured to passively remove one or more three-dimensional structures from the substrate, e.g. by passively removing the respective three-dimensional structure from the substrate, e.g. by a deflecting a motion of the respective three-dimensional structure such that it is deflected towards e.g. a three-dimensional structure collecting device. A concrete exemplary embodiment of a passive three-dimensional structure removing device can be a deflector configured to remove, e.g. by deflecting, one or more three-dimensional structures from the substrate and transferring it e.g. into a three-dimensional structure collecting device.

According to another exemplary embodiment, the apparatus can comprise at least one determination device configured to determine at least one chemical and/or physical property of the resin as supplied on the substrate, as removed from the substrate, or as removed from a three-dimensional structure and/or at least one chemical and/or physical property of a three-dimensional structure as formed on the substrate and/or at least one chemical and/or physical property of a three-dimensional structure after being removed from the substrate, and to generate an information indicative of the determined at least one chemical and/or physical property of the resin as supplied on the substrate, as removed from the substrate, or as removed from a three-dimensional structure and/or at least one chemical and/or physical property of a three-dimensional structure as formed on the substrate and/or at least one chemical and/or physical property of a three-dimensional structure after being removed from the substrate. The at least one determination device can comprise one or more determination elements, e.g. sensors, such as e.g. chemical and/or physical sensors. Also, acoustic or optic sensors are conceivable. Respective determination elements can be arranged upstream and/or downstream of the at least one forming zone, for instance. Particularly, respective determination elements can be arranged at multiple discrete positions upstream and/or downstream of the at least one forming zone. The information generated by respective determination elements can be fed to the or a controller of the apparatus. Particularly, the controller can be configured to control the operation of at least one of: the substrate supply device, the resin supply device, the dual-color irradiation device, the at least one first and/or second resin removal device, or the at least one post-processing device based on the information generated by respective determination elements. As an example, the information generated by respective determination elements can be used to control operation of the dual-color irradiation device to adjust irradiation parameters, such as e.g. intensity, energy density, etc., of the light of the first and/or second wavelength and/or to control the chemical composition of the photocurable resin, e.g. with respect to the amount of used photocurable resin and fresh photocurable resin, as supplied by the resin supply device. Generally, the information can particularly, be used to implement a control loop for controlling operation of one or more of the aforementioned devices.

According to another exemplary embodiment, the apparatus can comprise at least one functional material supply device configured to provide at least one functional material on a freely exposed surface of the photocurable resin as supplyable or supplied by the resin supply device. The at least one functional material supply device can be arranged upstream and/or downstream of the resin supply device with respect to the supply direction of the photocurable resin, for instance. The at least one functional material supply device can be configured to provide, e.g. by dripping, spraying, rinsing, pouring, etc., at least one functional material on a freely exposed surface of the photocurable resin as supplyable or supplied by the resin supply device. The at least one functional material supply device can thus, comprise one or more functional material supply elements, e.g. nozzle elements, which communicate, e.g. via one or more connection lines, with at least one storage of a respective functional material. A respective functional material can e.g. be or comprise an adhesive material which provides adhesion between the substrate and the photocurable resin, thereby positively influencing the curing process of the photocurable resin, for instance. Additionally or alternatively, a respective functional material can be an anti-adhesive material which avoids adhesion between the substrate and the photocurable resin, e.g. to thereby ease removal of a three-dimensional structure from the substrate. Additionally or alternatively, a respective functional material can e.g. be or comprise an anti-reflective material which provides the substrate with anti-reflective properties with respect to the light of the first and/or second wavelength, thereby positively influencing the curing of the photocurable resin. Additionally or alternatively, a respective functional material can e.g. be or comprise an anti-reflective material which provides the substrate with absorptive properties with respect to the light of the first and/or second wavelength, thereby positively influencing the curing of the photocurable resin. As such, a respective functional material can generally be a material which reduces or inhibits chemical and/or physical alteration of the photocurable resin as supplyable or supplied by the resin supply device, and/or a functional material which reduces or inhibits reflectance of the photocurable resin with respect to the light of the first and/or second wavelength.

According to another exemplary embodiment, the at least one substrate can form a closed loop. As an example, a respective closed loop configuration can be or comprise a ring-like arrangement. The at least one substrate can thus, be arranged as a ring, for instance. Also, polygonal arrangements, such as e.g. pentagonal arrangements, hexagonal arrangements, heptagonal arrangements, octagonal arrangements, etc., are conceivable, for instance. In either closed loop configuration, the at least one substrate can be or comprise an endless band or an endless belt, respectively. A drive means, e.g. a drive motor, for generating a drive force or momentum to generate a motion of the substrate in the at least one supply direction is assigned to the substrate supply device. Particularly, the drive means enables a rotation motion of the substrate relative to the resin supply device and the other devices of the apparatus which can thus, be stationary. Also, an inverse configuration with a stationary substrate and moveable devices of the apparatus is generally conceivable.

A second aspect of the invention relates to a method for forming a three-dimensional structure by dual-color photopolymerization of a photocurable resin on a substrate, particularly by using an apparatus according to the first aspect of the invention such that all remarks made in connection with the apparatus according to the first aspect of the invention also apply to the method of the second aspect of the invention and vice versa. The method particularly comprises the following steps: continuously or discontinuously supplying, particularly via a substrate supply device, a substrate on which the three-dimensional structure can be formed in a supply direction; continuously or discontinuously supplying, particularly via a resin supply device, a photocurable resin on the substrate; continuously or discontinuously irradiating, via a dual-color irradiation device, the photocurable resin supplied on the substrate with light of a first wavelength and light of a second wavelength different form the first wavelength to form a three-dimensional structure, wherein the three-dimensional structure is formed in at least one forming zone.

According to an exemplary embodiment, the or a three-dimensional structure can be formed within a volume of the photocurable resin, which is irradiated by the light of the first and second wavelength, directly on a surface of the substrate such that it contacts the surface of the substrate. Alternatively, the or a three-dimensional structure can be formed within a volume of the photocurable resin, which is irradiated by the light of the first and second wavelength, above the surface of the substrate such that it does not contact the substrate.

According to an exemplary embodiment, the three-dimensional structure can be or comprise at least one optical element, particularly an optical lens, or an arrangement of optical elements, particularly an optical lens arrangement, such as e.g. an array of optical lenses.

### Brief description of the drawings

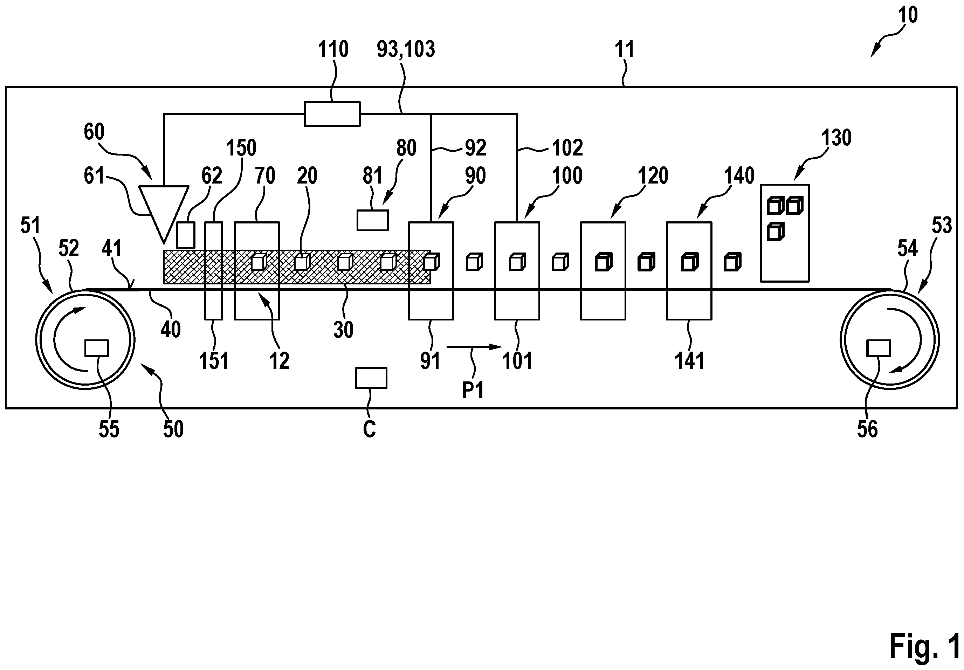

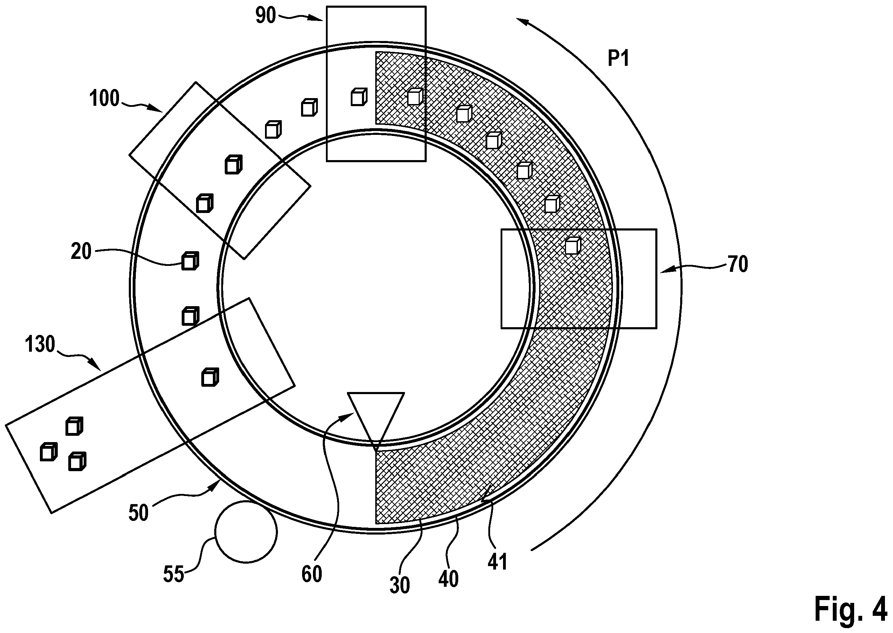

With these and other advantages and features that will become hereinafter apparent, a more complete understanding of the invention can be obtained by referring to the following description of the appended drawings in which Fig. 1 - 3 each show a principle drawing of at least parts of an apparatus for forming a three-dimensional structure according to a first exemplary embodiment, and Fig. 4 shows a principle drawing of an apparatus for forming a three-dimensional structure according to another exemplary embodiment.

### Detailed description of the drawings

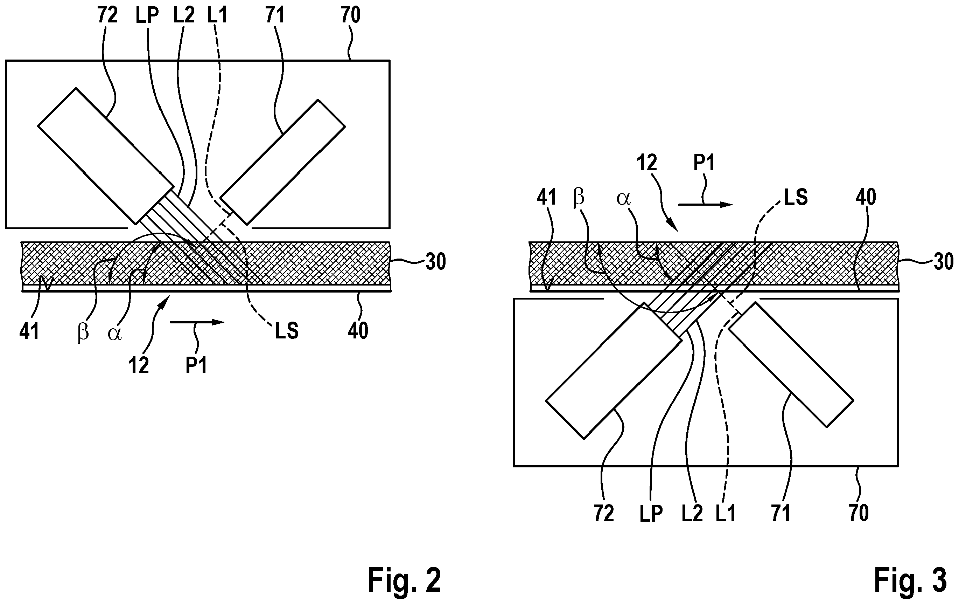

Fig. 1 - 3 each show a principle drawing of an apparatus 10 for forming a three-dimensional structure 20 according to an exemplary embodiment. More specifically, Fig. 1 shows a respective apparatus 10 in a side-view and Fig. 2, 3 each shows an enlarged side-view of a forming zone of a respective apparatus 10 according to an exemplary embodiment.

The apparatus 10 according to the embodiments of the Fig. is generally configured to form a three-dimensional structure 20 by dual-color photopolymerization of a photocurable resin 30. A respective three-dimensional structure 20 can be a three-dimensional object or form part of a three-dimensional object. A respective three-dimensional object can be a technical component or form part of a technical component, for instance. As an example, a technical component can be an optical component or form part of an optical component. As an example, a respective optical component can be a diffractive element, a transmissive element, or a lens element, for instance.

As such, the apparatus 10 is configured to perform, via dual-color photopolymerization, one or more local polymerization processes of a photocurable resin 30 which comprises one or more photoinitiators. As an example, a respective photocurable resin 30 can be a photocurable monomer resin or a photocurable oligomer resin, which may include acrylates, methacrylates, thiol + ene, epoxides, oxiranes, oxetanes, or vinylethers, for instance. The apparatus 10 is configured to continuously additively manufacture at least one three-dimensional structure 20 by means of dual-color photopolymerization of a respective photocurable resin 30 on a substrate 40. Photopolymerization of the photocurable resin 30 is typically, effected by irradiating the photocurable resin 30 with light L1 of at least one first wavelength and, particularly simultaneously, light L2 of at least one second wavelength different from the first wavelength, which results in that molecules of the one or more photoinitiators of the photocurable resin 30 are converted, e.g., due to the absorption of the light L1 of the first wavelength, from an initial state in which the molecules of the one or more photoinitiators (substantially) do not absorb the light L2 of the second wavelength, into an intermediate state with changed optical properties compared to the initial state, such that the molecules of the one or more photoinitiators in the intermediate state absorb the light L2 of the second wavelength which results in that the molecules of the one or more photoinitiators are transferred from the intermediate state to a reactive state which locally triggers the polymerization of the photocurable resin to form at least one three-dimensional structure 20.

A back reaction of the molecules of the one or more photoinitiators from the intermediate state into the initial state can be thermally induced, for instance. Hence, the intermediate state may return thermally at the printing temperature in the photocurable resin to the initial state. Preferably, the intermediate state may return thermally at the printing temperature to the initial state in a reaction or reaction sequence with one or more rate constants with the highest rate constant higher than k=0.01 s⁻¹. Especially preferably, at least one rate constant for the thermal back reaction is higher than 0.02 s⁻¹, more preferably higher than 0.05 s⁻¹, even more preferably higher than 0.1 s⁻¹, still more preferably higher than 1.0 s⁻¹, most preferably higher than 5.0 s⁻¹. Hence, the rate constant may be in the range of 0.05 s⁻¹ and 1.0 s⁻¹, or any other range which may be formed from the values above. A high rate constant may result in an improved resolution of the printed three-dimensional structure.

Alternatively, the intermediate state may substantially not return thermally at the printing temperature in the photocurable resin to the initial state. Preferably, the intermediate state may return thermally at the printing temperature to the initial state in a reaction or reaction sequence with one or more rate constants with at least one rate constant lower than k=100 s⁻¹. Especially preferably, at least one rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Further alternatively, the intermediate state may substantially not return thermally at the printing temperature in the photocurable resin to the initial state. Preferably, the intermediate state may return thermally at the printing temperature to the initial state in a reaction or reaction sequence with one or more rate constants with the highest rate constant lower than k=100 s⁻¹. Especially preferably, the highest rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

A slow or neglectable back reaction may result in a higher degree of polymerization and therefore a harder green state. The typical problem of polymerization behind the printing zone as in processes described in the state of the art is strongly reduced via the apparatus and related process described herein, since the resin is moved out of the forming zone and especially out of the volume which is irradiated by the light of the second wavelength.

Suitable photoinitiators of a respective photocurable resin are known from US5230986A, WO2020245456A1, WO2023034398A1, WO2023034404A1, WO2023034402A1, WO2023220461A1, WO2023220463A1, the contents of which are incorporated herein by reference.

The apparatus 10 can be or comprise a volumetric 3d-printing apparatus, particularly a xolography apparatus, i. e. an apparatus configured to perform the base principles of xolography. The base principles of xolography are specified in WO 2020/245456 A1, the contents of which are incorporated herein by reference.

The apparatus 10 comprises a substrate supply device 50. The substrate supply device 50 is generally configured to, particularly continuously, supply a substrate 40 on which a three-dimensional structure 20 can be formed by dual-color photopolymerization. The substrate supply device 50 can comprise at least one substrate supply means 51 configured to, particularly continuously, supply a respective substrate 40 in at least one supply direction indicated by arrow P1 in the Fig. The substrate supply means 51 is arranged at a first position within an exemplary structure 11, particularly a housing structure, of the apparatus 10. Particularly, the substrate supply means 51 is configured to move a respective substrate 40 along at least one motion path through at least parts of the apparatus 10. The at least one supply direction can also be deemed or denoted a motion direction along which the substrate 40 is moved along the at least one motion path through at least parts of the apparatus 10. The substrate supply means 51 can be built by or comprise one or more substrate supply rollers 52, for instance. The substrate supply device 50 can further comprise at least one substrate take-up means 53 configured to take-up the respective substrate 40. The substrate take-up means 54 is arranged at a second position within the or an exemplary structure 11, particularly a housing structure, of the apparatus 10. The substrate take-up means 53 can be built by or comprise one or more substrate take-up rollers 54, for instance. Notably, the substrate supply means 51 and the substrate take-up means 53 are arranged relative to each other such that a substrate 40 extending between the substrate supply means 51 and the substrate take-up means 53 defines at least one forming zone 12 in which a three-dimensional structure 20 can be formed by dual-color photopolymerization of the photocurable resin 30. The at least one forming zone 12 thus, extends between the substrate supply means 51 and the substrate take-up means 52. As is apparent from Fig. 1, the at least one forming zone 12 can be an unsupported portion of the substrate 40 and thus, a freely extending portion of the substrate 40. In such a manner, the light L1, L2 used for curing the photocurable resin, via dual-color photopolymerization, in the at least one forming zone 12 does not interact with structural components of the apparatus 10, particularly the substrate supply means 51, the substrate take-up means 53, and any other possible means for supporting, guiding, or deflecting the substrate 40 examples of which will be provided further below.

The substrate supply means 51 can be assigned with at least one drive means 55, e.g. a drive motor, for generating a drive force or momentum to drive the substrate supply means 51 to generate a motion of the substrate 40 in the at least one supply direction between the substrate supply means 51 and the substrate take-up means 53. Additionally or alternatively, the substrate take-up means 53 can be assigned with a drive means 56, e.g. a drive motor, for generating a drive force or momentum to drive the substrate take-up means 53 to generate a motion of the substrate 40 in the at least one supply direction between the substrate supply means 51 and the substrate take-up means 53.

Even though not shown in the Fig., the apparatus 10 or the substrate supply device 50, respectively can further comprise at least one of: one or more substrate support means, one or more substrate guiding means, and one or more substrate deflection means, for instance. Respective substrate support means can be built by or comprise substrate support rollers, for instance. Respective substrate support guide means can be built by or comprising substrate guide rollers, for instance. Respective substrate deflection means can be built by or comprising substrate deflection rollers, for instance. At least one of the one or more substrate support means, the one or more substrate guiding means, and the one or more substrate deflection means can be assigned with a drive means, e.g. a drive motor, for generating a drive force or momentum to drive the one or more substrate support means, the one or more substrate guiding means, and the one or more substrate deflection means to generate a motion of the substrate 40 in the at least one supply direction between the substrate supply means 51 and the substrate take-up means 53.

The substrate supply means 51, the substrate take-up means 53 and at least one of the optional substrate support means, the optional substrate guiding means, and the optional substrate deflection means can be arranged relative to each other such that the substrate extends in one or more different spatial directions and/or orientations, respectively. As shown in Fig. 1, at least one spatial direction and orientation can be a horizontal direction and horizontal orientation, respectively parallel to horizontal axis. Yet, it is also conceivable that at least one spatial direction and orientation, respectively can be a vertical direction and vertical orientation, respectively parallel to a vertical axis or an inclined direction and inclined orientation, respectively inclined to a horizontal or a vertical axis.

The apparatus 10 further comprises a resin supply device 60. The resin supply device 60 is configured to supply a photocurable resin 30 on the substrate 40 supplied by the substrate supply device 50, particularly the substrate supply means 51. As such, the resin supply device 60 is assigned to the substrate supply device 50 and the substrate supply means 51, respectively. The resin supply device 60 can comprise one or more resin supply means 61 configured to form at least one defined layer of photocurable resin 30 on the substrate 40 supplied by the substrate supply device 50 and the substrate supply means 51, respectively. The resin supply means 61 can be built by or comprise one or more nozzle elements via which the photocurable resin 30 can be supplied on a surface of the substrate 40 supplied by the substrate supply device 50 and the substrate supply means 51, respectively. Respective nozzle elements can communicate, e.g. via one or more connection lines, with at least one resin storage device (not shown) in which one or more photocurable resins are stored. Further, the resin supply means 61 can be built by or comprise one or more, e.g. blade-like, layer forming elements 62 via which the photocurable resin 30 supplied on the surface of the substrate 40 supplied by the substrate supply device 50 and the substrate supply means 51, respectively can be formed in a shape of defined geometric properties. As is apparent from the Fig. 1, a respective shape of defined geometric properties can be a layer of defined geometric properties, e.g. defined width, defined length, and defined thickness. As an example, the thickness of a respective layer can range between 0.5 mm and 5.0 mm, particularly between 1.0 mm and 4 mm, more particularly between 1.25 mm and 3.0 mm, more particularly between 1.5 mm and 2.0 mm.

The apparatus 10 further comprises a dual-color irradiation device 70 configured to irradiate a photocurable resin 30 supplied on the substrate 40. The dual-color irradiation device 70 is configured to irradiate the photocurable resin 30 supplied on the substrate 40 with light L1 of a first wavelength and, particularly simultaneously, with light L2 of a second wavelength different form the first wavelength. The dual-color irradiation device 70 can comprise a first irradiation device 71 comprising at least one first light source for generating the light L1 of the first wavelength and a second irradiation device 72 comprising at least one second light source for generating the light L2 of the second wavelength. As indicated in Fig. 2, 3, the dual-color irradiation device 70 can be configured to generate a light sheet LS from the light L1 of the first wavelength, wherein the light sheet LS extends in a light sheet plane. Further, the dual-color irradiation device 70 can be configured to generate a light projection LP from the light of the second wavelength, wherein the light projection LP intersects with the light sheet LS at an intersection angle, particularly an intersection angle of (ca.) 90° (see Fig. 2, 3).

The first irradiation device 71 comprises at least one light source configured to irradiate light L1 of the first wavelength towards the photocurable resin 30 on the substrate 40 to generate at least one first light projection forming the light sheet LS. The light sheet LS can comprise multiple light beams traversing the substrate 40 in a single light plane. The first irradiation device 71 can be built as or comprise a laser or light emitting diode, for instance. The first irradiation device 71 can further comprise at least one optical element which can e.g. comprise at least one of: a Powell-lens, a cylindrical lens, a diffractive optical element, a beam expanding element, a collimating optical element, etc. Additionally or alternatively, the first irradiation device 71 can comprise a light deflection unit, such as e.g. a galvo-scanner or a polygon scanner, for deflecting light towards the substrate. The light L1 as emitted or irradiated by the first irradiation device 71 can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light L1 of the first wavelength can comprise a spectrum of wavelengths, particularly at least partly covering the respective ranges. As an example, the first wavelength can be ca. 375 nm. Typically, the first wavelength will be chosen at least under consideration of the photochemical properties, particularly the photochromic properties, of molecules of a photoinitiator of the photocurable resin 30.

The second irradiation device 72 comprises at least one second light source configured to continuously project a respective light projection comprising a plurality of images of light L2 of the second wavelength towards the photocurable resin 30 on the substrate 40. Each image of the second wavelength can correspond to a specific portion, particularly a specific cross-section, of the three-dimensional structure 20 to be formed with the apparatus 10. The second irradiation device 72 can be built as or comprise an image projector, for instance. The second irradiation device 72 can further comprise one or more light projection optics. The light as emitted or irradiated by the second irradiation device 72 can comprise a wavelength in the range of: 400 nm - 1000 nm, particularly 425 - 750 nm, more particularly 450 - 675 nm, more particularly 500 - 650 nm, for instance. The light L2 of the second wavelength can comprise a spectrum of wavelengths, particularly at least partly covering the respective ranges. Typically, the second wavelength will be chosen at least under consideration of the photochemical properties, particularly the photochromic properties, of molecules of a photoinitiator of the photocurable resin 30.

Providing the apparatus 10 with a dual-color irradiation device 70 configured to irradiate a photocurable resin 30 supplied on the substrate 40, wherein the dual-color irradiation device 70 is configured to irradiate the photocurable resin 30 with light L1 of a first wavelength and, particularly simultaneously, light L2 of a second wavelength different form the first wavelength, enables forming three-dimensional structures 20 with higher resolution compared to known apparatuses which comprise an irradiation device which uses light of a single wavelength.

As is apparent from Fig. 1, the substrate supply means 51 and the substrate take-up means 53 can be arranged relative to each other such that the substrate 40 extending between the substrate supply means 51 and the substrate take-up means 53 defines a planar forming zone 12 in which a three-dimensional structure 20 can be formed by dual-color photopolymerization. The planar forming zone 12 comprises a portion of the substrate 40 which extends planar between the substrate supply means 51 and the substrate take-up means 53. Fig. 1 particularly shows that the planar forming zone 12 can extend in a horizontal plane or parallel to a horizontal plane. As such, the substrate supply means 51 and the substrate take-up means 53 can be arranged in a common horizontal plane such that a substrate 40 extending between the substrate supply means 51 and the substrate take-up means 53 defines a horizontal planar forming zone in which a three-dimensional structure 20 can be formed by dual-color photopolymerization. However, it is also conceivable that the planar forming zone 12 is oriented inclined with respect to a horizontal plane. As such, the substrate supply means 51 and the substrate take-up means 53 can be arranged in two different horizontal planes such that a substrate 40 extending between the substrate supply means 51 and the subtract take-up means 53 defines an inclined planar forming zone in which a three-dimensional structure 20 can be formed by dual-color photopolymerization. As an example, respective inclination angles comprise angles in the range between 1° and 45°, particularly between 1° and 30°, more particularly between 1° and 15°, relative to the horizontal axis for instance.

The Fig. show that the substrate 40 can be a band or a belt which can define a resin receiving surface 41 on which the photocurable resin 30 can be supplied by the resin supply device 60. The resin receiving surface 41 can be an upper surface of the band or belt, respectively (as is exemplarily shown in the Fig.). A respective band or belt can be an endless band or an endless belt, respectively.

The Fig. also indicate that the substrate 40 can be a polymer film or a polymer foil defining the resin receiving surface on which the photocurable resin can be supplied by the resin supply device. Particularly, the polymer film or a polymer foil can be transmissive at least for the light L1 of the first wavelength and the light L2 of the second wavelength. Yet, it is also conceivable that the polymer film or a polymer foil can absorb, e.g. by a dark color, particularly black color, which absorbs at least the light L1 of the first wavelength and/or the light L2 of the second wavelength to avoid undesired light reflection.

The substrate 40 can have the same or similar optical properties, particularly a same or similar refractive index, as the photocurable resin 30 to be supplied thereon. As such, undesired optical losses at the interface between the substrate 40 and the photocurable resin 30 can be avoided or at least reduced, thereby increasing the efficiency of the curing process. As an example, the refractive index of the substrate 40 and/or the photocurable resin 30 can range between 1.0 and 2.0, particularly between 1.3 and 1.8, for instance.

As is also apparent from Fig. 2, 3, the resin receiving surface 41 of the substrate 40 can extend between the substrate supply means 51 and the substrate take-up means 53. The light L1, L2 emitted from the dual-color irradiation device 70 can be irradiated towards the resin receiving surface 41 of the substrate 40, respectively. Hence, the first irradiation 71 device and/or the second irradiation device 71 can be arranged adjacently disposed relative the forming zone 12 and substrate 40, respectively such that the light L1, L2 of the first and/or second wavelength can be directly irradiated towards the substrate 40 and the resin receiving surface 41 of the substrate 40, respectively. In such configurations, the light L1, L2 of the first and/or second wavelength can be (directly) directed towards the resin receiving surface 41 of the substrate 40, respectively. However, it is also conceivable that the first irradiation device 71 and/or the second irradiation 72 device are not arranged adjacently disposed relative the forming zone 12 and substrate 40, respectively. In such configurations, the light L1, L2 of the first and/or second wavelength can be (indirectly) directed towards the substrate 40 and the resin receiving surface 41 of the substrate 40, respectively by one or more (optical) deflection elements, e.g. mirrors, such that the light L1, L2 of the first and/or second wavelength can be deflected towards the substrate 40 and the resin receiving surface 41 of the substrate 40, respectively. In such configurations, the first irradiation device 71 and/or the second irradiation device 72 can even be arranged remote from the substrate 40 and the resin receiving surface 41 of the substrate 40, respectively. In another exemplary configuration, the first irradiation device 71 and the second irradiation device 71 can be arranged on opposition side of the substrate 40. As an example, the first irradiation device 71 can be disposed above an upper surface of the substrate 40, i.e. above the substrate 40, and the second irradiation device can be arranged below the upper surface of the substrate 40, i.e. below the substrate 40. As such, the apparatus 10 can be provided with a high degree of flexibility with respect to the arrangement of the first irradiation device 71 and/or the second irradiation device 72. Fig. 2 and 3 generally show that the dual-color irradiation device 70 can be arranged above or below the resin receiving surface 41 of the substrate 40.

As indicated further above, the substrate 40 can have transmissive and/or non-reflective properties with respect to the light L1, L2 of the first and/or the second wavelength. As such, the optical properties of the substrate 40 do not negatively interact with the light L1, L2 of the first and/or second wavelength. This assures photocuring of the photocurable resin 30 on the substrate 40 with high accuracy which results in three-dimensional structures 20 of good quality, particularly high resolution.

The apparatus 10 can comprise a hardware- and/or software-embodied controller C assigned at least to the dual-color irradiation device 70. The controller C can be configured to control the properties of the light L1, L2 of the first and/or second wavelength based on an information indicative of at least one chemical and/or physical property of the substrate 40 and/or at least one chemical and/or physical property of the photocurable resin 30 supplied on the substrate 40. As such, the irradiation process of the photocurable resin 30 and thus, the curing process of the photocurable resin 30 can be controlled by controlling the properties, e.g. intensity, energy density, etc., of the light L1, L2 of the first and/or second wavelength based on an information indicative of at least one chemical and/or physical property of the substrate 40 and/or at least one chemical and/or physical property of the photocurable resin 30 supplied on the substrate 40. A respective chemical and/or physical property of the substrate 40 and/or the photocurable resin 30 supplied on the substrate 40 can refer to a property which influences the absorption behavior of the photocurable resin 30 for the light L1, L2 of the first and/or second wavelength. As such, respective chemical and/or physical property of the substrate 40 and/or the photocurable resin 30 supplied on the substrate 40 can refer to the chemical composition of the substrate and/or the photocurable resin 30 supplied on the substrate 40, the absorptive and/or transmissive properties of the substrate 40 and/or the photocurable resin 30 supplied on the substrate 40, surface properties, e.g. roughness, of the substrate 40 and/or the photocurable resin 30 supplied on the substrate 40, for instance.

As indicated above, the thickness of a respective layer of the photocurable resin 30 supplied on the substrate 40 can range between 0.1 mm and 10.0 mm, particularly between 0.5 mm and 5.0 mm, more particularly between 1.0 mm and 4.0 mm, more particularly between 1.25 mm and 3.0 mm, more particularly between 1.5 mm and 2.0 mm, for instance. Generally, the thickness of the photocurable resin 30 supplied on the substrate 40 can enable that comparatively high concentrations of the respective one or more photoinitiators can be used which assures that the formed three-dimensional structure 20 has comparatively high hardness (already) in the respective green state. Lower thicknesses of the photocurable resin 30 can thus, result in that the photocurable resin 30 can comprise a chemical composition with a relative high concentration of the one or more photoinitiators. Lower thicknesses of the photocurable resin 30 can also enable the photocurable resin 30 to tolerate high loadings of particles which cause scattering and still allow decent quality of the three-dimensional structure 20.

Generally, the photocurable resin 30 can comprise one or more absorption agents increasing the absorption properties of the photocurable resin with respect to the light of the first and/or second wavelength. Additionally or alternatively, the photocurable resin 30 can comprise one or more color agents, such as e.g. dyes. Providing the photocurable resin 30 with a specific color which can also increase the absorption properties of the photocurable resin 30 with respect to the light of the first and/or second wavelength, thus resulting in a formed three-dimensional structure 20 having comparatively high hardness (already) in the respective green state.

It has been indicated above that the resin supply means 61 can be built by or comprise one or more, e.g. blade-like, layer forming elements 62 via which the photocurable resin 30 supplied on the substrate 40 supplied by the substrate supply device 50 and the substrate supply means 51, respectively can be formed in a layer of defined geometric properties. Hence, the resin supply device 60 can be configured to supply a layer, particularly a continuous layer, of photocurable resin 30 on the substrate 40 supplied by the substrate supply device 50 and the substrate supply means 51, respectively. Respective layer forming elements 62 can be particularly, configured to form a layer of homogenous geometric properties, particularly homogenous thickness, which can positively affect the curing properties of the photocurable resin 30 on the substrate 40. Respective layer forming elements 62 can be moveably supported relative to the substrate 40, e.g. to achieve a specific geometry, particularly a specific thickness, of a respective layer of photocurable resin 30. As an example, the distance between a free layer forming contour of one or more layer forming elements 62 and the surface of the substrate 40 can be adjusted by a respective motion of the one or more layer forming elements 62 relative to the surface of the substrate 42.

The apparatus 10 can comprise a determination device 80, comprising one or more determination elements 81, e.g. (optical) sensors, configured to determine one or more geometric properties, e.g. width, length, thickness, etc., of a respective layer of photocurable resin 30 at one or more determination positions of the substrate 40. Respective determination positions can particularly, comprise one position before (upstream with respect to the at least one supply direction) the forming zone 12 and/or one position after (downstream with respect to the at least one supply direction) the forming zone 12. The information generated by respective determination elements 81 can be fed to the controller C of the apparatus 10, e.g. for controlling the operation of the first irradiation device 71 and/or the second irradiation device 72, e.g. by controlling the properties of the light L1, L2 of the first and/or second wavelength. As such, also geometric properties of the photocurable resin 30 on the substrate 40 can be considered for implementing a control of the operation of the first irradiation device 71 and/or the second irradiation device 72.

Fig. 1 also shows that the apparatus 10 can comprise a first resin removal device 90 configured to remove uncured resin from the substrate 40. The first resin removal device 90 is particularly arranged downstream of the dual-color irradiation device 70 in the at least one supply direction. The first resin removal device 90 can comprise one or more first resin removal elements 91 configured to chemically and/or physically remove uncured resin from the substrate 40. As an example, a respective first resin removal element 91 can be configured to remove uncured resin from the substrate 40 by physical means, such as e.g. a dripping plate, centrifugal forces via a roller, by mechanical means, such as e.g. a scraper, and/or by applying, e.g. via spraying, rinsing, etc., a resin removal fluid, e.g. a solvent, on the substrate 40 such that uncured resin can be rinsed or washed off the substrate 40. In either case, removed uncured resin can be fed back, possibly after one or more intermediate processing steps, to the resin supply device 60. In such a manner, a resin recycling loop can be implemented which can form base for a sustainable operation of the apparatus 10. Typically, only resin which has been physically removed is fed back because this resin does not comprise solvent.

Fig. 1 also shows that the apparatus 10 can comprise a second resin removal device 100 configured to remove uncured resin from a formed three-dimensional structure 20. The second resin removal device 100 is particularly arranged downstream of the dual-color irradiation device 70 in the supply direction. The second resin removal device 100 can comprise one or more second resin removal elements 101 configured to chemically and/or physically remove uncured resin from the three-dimensional structure 20. As an example, a respective second resin removal element 101 can be configured to remove uncured resin from the three-dimensional structure 20 by physical means, such as e.g. a dripping plate, centrifugal forces via a roller, by mechanical means, such as e.g. a scraper, and/or by applying, e.g. via spraying, rinsing, etc., a resin removal fluid, e.g. a solvent, on the three-dimensional structure 20 such that uncured resin can be rinsed or washed off the three-dimensional structure 20. In either case, removed uncured resin can be fed back, possibly after one or more intermediate processing steps, to the resin supply device 60. In such a manner, a resin recycling loop can be implemented which can form base for a sustainable operation of the apparatus 10.

As such, the first and/or second resin removal device 90, 100 can be configured to convey uncured resin removed from the substrate 40 and/or a formed three-dimensional structure 20 to the resin supply device 60, particularly to generate a resin recycling loop. The apparatus 10 can therefore, comprise one or more conveying devices 92, 102, such as e.g. pumps, and associated conveying lines 93, 103, such as e.g. tubes, pipes, etc., for conveying uncured resin removed from the substrate 40 and/or a formed three-dimensional structure 40 to the resin supply device 60, particularly to generate a resin recycling loop.

Particularly for implementing a respective resin recycling loop, the apparatus 10 can further comprise a blender or mixer configured to blend or mix at least a part of uncured photocurable resin 30 which has been removed from the substrate 40 or from a three-dimensional structure 20 with fresh photocurable resin 30, particularly to create a homogenous blend or mixture having defined chemical and/or physical properties. Hence, the apparatus 10 can comprise a supply of fresh photocurable resin 30 which can be blended or mixed with removed uncured photocurable resin 30 to generate a processed photocurable resin containing both removed photocurable resin and fresh photocurable resin.

Fig. 1 also shows that the apparatus 10 can comprise one or more resin processing devices 110 configured to process uncured resin removed from the substrate 40 and/or a three-dimensional structure 20 to alter at least one property of the uncured resin 20 with respect to at least one target property of the photocurable resin 20 to be supplied via the resin supply device 60. Respective resin processing devices 110 can particularly, be configured to alter at least one chemical and/or physical property, e.g. chemical composition, e.g. with respect to the concentration of a photoinitiator, absorption of the light of the first and/or second wavelength, transmission of the light of the first and/or second wavelength, viscosity, temperature, etc., of the uncured resin with respect to at least one target property, e.g. a target chemical composition, e.g. with respect to a target concentration of the photoinitiator, a target absorption of the light of the first and/or second wavelength, a target transmission of the light of the first and/or second wavelength, a target viscosity, a target temperature, etc., of the resin to be supplied via the resin supply device. Respective resin processing devices 110 can thus, comprise one or more material supply devices e.g. configured to supply fresh photocurable 30 resin to uncured resin removed from the substrate 40 and/or a three-dimensional structure 20. Respective resin processing devices 110 can further comprise determination elements, e.g. sensors, to determine at least one respective chemical and/or physical property of the uncured resin 30 removed from the substrate 40 and/or a three-dimensional structure 20 before, during or after processing.

Fig. 1 also shows that the apparatus 10 can comprise at least one post-processing device 120 configured to perform at least one chemical and/or physical post-processing measure on a formed three-dimensional structure 20. The post-processing device 120 can be particularly, configured to post-cure a formed three-dimensional structure 20 such that the formed three-dimensional structure 20 obtains desired physical properties, e.g. optical and/or mechanical properties. As such, post-processing can particularly, comprise curing of the formed three-dimensional structure 20, e.g. by exposing the formed three-dimensional structure 20 to electromagnetic and/or thermal energy, and/or changing the optical absorptive and/or transmissive properties of the formed three-dimensional structure 20 with respect to light in the visible wavelength spectrum, particularly the color, e.g. by exposing the formed three-dimensional structure 20 to electromagnetic and/or thermal energy. Generally, post-processing can comprise transferring the formed three-dimensional structure 20 from a green state e.g. to a brown state and/or a final state.

Fig. 1 also shows that the apparatus 10 can comprise a three-dimensional structure removing device 130 configured to, particularly continuously or discontinuously, remove one or more three-dimensional structures 20, i.e. particularly post-processed three-dimensional structures 20, from the substrate 40. Particularly, the three-dimensional structure removing device 130 can be an active three-dimensional structure removing device 130 configured to actively remove one or more three-dimensional structures 20 from the substrate 40, e.g. by actively removing the respective three-dimensional structure 20 from the substrate 40, e.g. by a grabbing action. A concrete exemplary embodiment of an active three-dimensional structure removing device 130 can be a handling robot configured to remove, e.g. by grabbing, one or more three-dimensional structures 20 from the substrate 40 and transferring it e.g. into a three-dimensional structure collecting device. Alternatively, the three-dimensional structure removing device 130 can be a passive three-dimensional structure removing device 130 configured to passively remove one or more three-dimensional structures 20 from the substrate 40, e.g. by passively removing the respective three-dimensional structure 20 from the substrate 40, e.g. by a deflecting a motion of the respective three-dimensional structure 20 such that it is deflected towards e.g. a three-dimensional structure collecting device. A concrete exemplary embodiment of a passive three-dimensional structure removing device 130 can be a deflector configured to remove, e.g. by deflecting, one or more three-dimensional structures 20 from the substrate 40 and transferring it e.g. into a three-dimensional structure collecting device.

The apparatus 10 can further comprise at least one determination device 140 configured to determine at least one chemical and/or physical property of the photocurable resin 30 as supplied on the substrate 40, as removed from the substrate 40, or as removed from a three-dimensional structure 20 and/or at least one chemical and/or physical property of the three-dimensional structure 20 as formed on the substrate 40 and/or at least one chemical and/or physical property of the three-dimensional structure 20 after being removed from the substrate 40, and to generate an information indicative of the determined at least one chemical and/or physical property of the photocurable resin 30 as supplied on the substrate 40, as removed from the substrate 40, or as removed from a three-dimensional structure 20 and/or at least one chemical and/or physical property of a three-dimensional structure 20 as formed on the substrate 40 and/or at least one chemical and/or physical property of the three-dimensional structure 20 after being removed from the substrate 40. The at least one determination device 140 can comprise one or more determination elements 141, e.g. sensors, such as e.g. chemical and/or physical sensors. Also, acoustic or optic sensors are conceivable. Respective determination elements 141 can be arranged upstream and/or downstream of the forming zone 12, for instance. Particularly, respective determination elements 141 can be arranged at multiple discrete positions upstream and/or downstream of the forming zone 12. The information generated by respective determination elements 141 can be fed to the controller C of the apparatus 10. Particularly, the controller C can be configured to control the operation of at least one of: the substrate supply device 50, the resin supply device 60, the dual-color irradiation device 70, the at least one first and/or second resin removal device 90, 100, or the post-processing device 120 based on the information generated by respective determination elements 141. As an example, the information generated by respective determination elements 141 can be used to control operation of the dual-color irradiation device 70 to adjust irradiation parameters, such as e.g. intensity, energy density, etc., of the light of the first and/or second wavelength and/or to control the chemical composition of the photocurable resin 30, e.g. with respect to the amount of used photocurable resin 30 and fresh photocurable resin 30, as supplied by the resin supply device 60. Generally, the information can particularly, be used to implement a control loop for controlling operation of one or more of the aforementioned devices.

The apparatus 10 can further comprise at least one functional material supply device 150 configured to provide at least one functional material on a freely exposed surface of the photocurable resin 30 as supplyable or supplied by the resin supply device 60. The at least one functional material supply device 150 can be arranged upstream and/or downstream of the resin supply device 60 with respect to the supply direction of the photocurable resin 30, for instance. The at least one functional material supply device 150 can be configured to provide, e.g. by dripping, spraying, rinsing, pouring, etc., at least one functional material on a freely exposed surface of the photocurable resin 30 as supplyable or supplied by the resin supply device 60. The at least one functional material supply device 150 can thus, comprise one or more functional material supply elements 151, e.g. nozzle elements, which communicate, e.g. via one or more connection lines, with at least one storage of a respective functional material. A respective functional material can e.g. be or comprise an adhesive material which provides adhesion between the substrate 40 and the photocurable resin 30, thereby positively influencing the curing process of the photocurable resin, for instance. Additionally or alternatively, a respective functional material can be an anti-adhesive material which avoids adhesion between the substrate 40 and the photocurable resin 30, e.g. to thereby ease removal of a three-dimensional structure 20 from the substrate 40. Additionally or alternatively, a respective functional material can e.g. be or comprise an anti-reflective material which provides the substrate 40 with anti-reflective properties with respect to the light L1, L2 of the first and/or second wavelength, thereby positively influencing the curing of the photocurable resin 30. Additionally or alternatively, a respective functional material can e.g. be or comprise an anti-reflective material which provides the substrate 40 with absorptive properties with respect to the light L1, L2 of the first and/or second wavelength, thereby positively influencing the curing of the photocurable resin 30. As such, a respective functional material can generally be a material which reduces or inhibits chemical and/or physical alteration of the photocurable resin 30 as supplyable or supplied by the resin supply device 60, and/or a functional material which reduces or inhibits reflectance of the photocurable resin 30 with respect to the light L1, L2 of the first and/or second wavelength.

Fig. 4 shows a principle drawing of an apparatus 10 for forming a three-dimensional structure 20 according to another exemplary embodiment. The embodiment of Fig. 4 differs from the embodiment of Fig. 1 in that it shows an exemplary closed-loop configuration of the substrate 40. Particularly, the substrate 40, which can be embodied as an endless band or an endless belt, for instance, is arranged as a ring and thus, configured in a ring-like arrangement. Also, polygonal arrangements, such as e.g. pentagonal arrangements, hexagonal arrangements, heptagonal arrangements, octagonal arrangements, etc., are conceivable, for instance.

A drive means 55, e.g. a drive motor, for generating a drive force or momentum to generate a motion of the substrate 40 in the at least one supply direction is assigned to the substrate supply device 50. Particularly, the drive means 55 enables a rotation motion of the substrate 40 (see arrow P1) relative to the resin supply device 60 and the other devices of the apparatus 10 which can thus, be stationary. Also, an inverse configuration is conceivable.

The apparatus 10 of the exemplary embodiments of the Fig. enables implementing a method for forming a three-dimensional structure 20 by dual-color photopolymerization of a photocurable resin 30 on a moveable substrate 40. The method particularly comprises the following steps: continuously or discontinuously supplying, particularly via a substrate supply device 50, a substrate 40 on which a three-dimensional structure 20 can be formed in a supply direction; continuously or discontinuously supplying, particularly via a resin supply device 60, a photocurable resin 30 on the substrate 40; continuously or discontinuously irradiating, via a dual-color irradiation device 70, the photocurable resin 30 supplied on the substrate 40 with light L1 of a first wavelength and light L2 of a second wavelength different form the first wavelength to form a three-dimensional structure 20, wherein the three-dimensional structure 20 is formed in at least one forming zone 12.

The three-dimensional structure 20 can be formed within a volume of the photocurable resin 30, which is irradiated by the light L1, L2 of the first and second wavelength, directly on a surface of the substrate 40 such that it contacts the surface of the substrate 40. Alternatively, the or a three-dimensional structure 20 can be formed within a volume of the photocurable resin 30, which is irradiated by the light L1, L2 of the first and second wavelength, above the surface of the substrate 40 such that it does not contact the substrate 40.

The three-dimensional structure 20 can be or comprise at least one optical element, particularly an optical lens, or an arrangement of optical elements, particularly an optical lens arrangement, such as e.g. an array of optical lenses.

## Claims

1. An apparatus for forming a three-dimensional structure by dual-color photopolymerization of a photocurable resin, the apparatus comprising:
- a substrate supply device, configured to, particularly continuously, supply a substrate on which the three-dimensional structure can be formed in a supply direction, wherein the substrate defines at least one forming zone in which a three-dimensional structure can be formed by dual-color photopolymerization,
- a resin supply device configured to supply a photocurable resin on a substrate supplied by the substrate supply device, particularly the substrate supply means,
- a dual-color irradiation device configured to irradiate a photocurable resin supplied on the substrate, wherein the dual-color irradiation device is configured to irradiate the resin with light of a first wavelength and light of a second wavelength different form the first wavelength.

2. The apparatus of claim 1, wherein the forming zone is a planar forming zone.

3. The apparatus of claim 1 or 2, wherein the substrate has transmissive and/or non-reflective properties with respect to the light of the first and the second wavelength, wherein, optionally, the substrate is or comprises a polymer film or polymer foil having transmissive and/or non-reflective properties with respect to the light of the first and the second wavelength.

4. The apparatus of any one of the preceding claims, wherein the substrate defines a resin receiving surface on which the photocurable resin can be supplied by the resin supply device, wherein the dual-color irradiation device is arranged above or below the resin receiving surface.

5. The apparatus of any one of the preceding claims, wherein the dual-color irradiation device is configured to irradiate the light of the first wavelength at a first angle, particularly an angle of 0 - 180°, and the light of the second wavelength at a second angle, particularly an angle of 0 - 180°, relative to the main extension plane of the substrate or the at least one forming zone.

6. The apparatus of any one of the preceding claims, wherein the resin supply device is configured to supply a layer, particularly a continuous layer, of photocurable resin on a substrate supplied by the substrate supply device, wherein the resin supply device comprises one or more layer forming elements, e.g. layer forming blades, configured to form the layer of photocurable resin on the substrate.

7. The apparatus of any one of the preceding claims, further comprising at least one first resin removal device configured to remove, e.g. via a solvent, uncured resin from the substrate, wherein the at least one first resin removal device is particularly arranged downstream of the dual-color irradiation device in the supply direction; and/or at least one second resin removal device configured to remove, e.g. via a solvent, uncured resin from a formed three-dimensional structure, wherein the at least one second resin removal device is particularly arranged downstream of the dual-color irradiation device in the supply direction, wherein optionally the at least one first resin removal device and/or the at least one second resin removal device is configured to convey uncured resin removed from the substrate and/or the formed three-dimensional structure to the resin supply device, particularly to generate a resin recycling loop.

8. The apparatus of any one of any one of the preceding claims, further comprising one or more resin processing devices configured to process uncured resin removed from the substrate and/or three-dimensional structure to alter at least one property of the uncured resin with respect to at least one target property of the resin to be supplied via the resin supply device.

9. The apparatus of any one of the preceding claims, further comprising at least one structure removal device configured to remove a formed three-dimensional structure from the substrate, wherein the at least one structure removal device is particularly arranged downstream of the dual-color irradiation device in the supply direction.

10. The apparatus of any one of the preceding claims, further comprising at least one post-processing device configured to perform at least one chemical and/or physical post-processing measure on a formed three-dimensional structure.

11. The apparatus of any one of the preceding claims, further comprising at least one determination device configured to determine at least one chemical and/or physical property of the resin as supplied on the substrate, as removed from the substrate, or as removed from the three-dimensional structure and/or at least one chemical and/or physical property of the three-dimensional structure as formed on the substrate and/or at least one chemical and/or physical property of the three-dimensional structure after being removed from the substrate, and to generate an information indicative of the determined at least one chemical and/or physical property of the resin as supplied on the substrate as removed from the substrate, or as removed from the three-dimensional structure and/or at least one chemical and/or physical property of the three-dimensional structure as formed on the substrate and/or at least one chemical and/or physical property of the three-dimensional structure after being removed from the substrate.

12. The apparatus of claim 11, further comprising at least one controller configured to control the operation of at least one of: the substrate supply device, the resin supply device, the dual-color irradiation device, the at least one first and/or second resin removal device, or the at least one post-processing device based on the information.

13. The apparatus of any one of the preceding claims, further comprising at least one functional material supply device configured to provide a functional material on a freely exposed surface of the photocurable resin as supplyable or supplied by the resin supply device and/or the surface of the substrate supplied by the substrate supply device.

14. The apparatus of any one of the preceding claims, wherein the substrate has the same or similar optical properties, particularly a same or similar refractive index, as the photocurable resin to be supplied thereon or the formed three-dimensional structure.

15. A method for forming a three-dimensional structure by dual-color photopolymerization of a photocurable resin, particularly by using an apparatus according to any one of the preceding claims, the method comprising:
- continuously or discontinuously supplying, particularly via a substrate supply device, a substrate on which the three-dimensional structure can be formed in a supply direction,
- continuously or discontinuously supplying, particularly via a resin supply device, a photocurable resin on the substrate,
- continuously or discontinuously irradiating, via a dual-color irradiation device, the photocurable resin supplied on the substrate with light of a first wavelength and light of a second wavelength different form the first wavelength to form a three-dimensional structure, wherein the three-dimensional structure is formed in at least one forming zone.

16. The method of claim 15, wherein the three-dimensional structure is formed directly on a surface of the substrate such that it contacts the surface of the substrate, or wherein the three-dimensional structure is formed above the surface of the substrate such that it does not contact the substrate.

17. The method of claim 15 or 16, wherein the three-dimensional structure is or comprises at least one optical element, particularly an optical lens, or an arrangement of optical elements, particularly an optical lens arrangement.
